Europäisches Patentamt

European Patent Office

Office européen des brevets

(19)

(11) Numéro de publication : **0 084 484 B2**

(12) **NOUVEAU FASCICULE DE BREVET EUROPEEN**

(45) Date de publication du nouveau fascicule du brevet : **09.03.94 Bulletin 94/10**

(51) Int. Cl.$^5$ : **H01G 13/02**

(21) Numéro de dépôt : **83400061.4**

(22) Date de dépôt : **11.01.83**

(54) **Procédé et dispositif de fabrication de condensateurs mères par enroulement en spirale.**

(30) Priorité : **12.01.82 FR 8200374**

(43) Date de publication de la demande :
**27.07.83 Bulletin 83/30**

(45) Mention de la délivrance du brevet :
**08.10.86 Bulletin 86/41**

(45) Mention de la décision concernant
l'opposition :
**09.03.94 Bulletin 94/10**

(84) Etats contractants désignés :
**BE DE IT NL**

(56) Documents cités :
**DE-A- 2 752 767
DE-A- 2 845 695
DE-A- 3 015 678**

(56) Documents cités :
**DE-C- 1 764 541
DE-C- 2 424 368
DE-C- 2 541 111
FR-A- 2 011 553
US-A- 3 128 218
US-A- 3 273 816**

(73) Titulaire : **COMPAGNIE EUROPEENNE DE
COMPOSANTS ELECTRONIQUES LCC
50, rue Jean -Pierre Timbaud B.P. 301
F-92402 Courbevoie (FR)**

(72) Inventeur : **Roy, Claude
THOMSON-CSF SCPI 173, bld Haussmann
F-75379 Paris Cedex 08 (FR)**

(74) Mandataire : **Guérin, Michel et al
THOMSON-CSF SCPI B.P. 329 50, rue
Jean-Pierre Timbaud
F-92402 Courbevoie Cédex (FR)**

EP 0 084 484 B2

Jouve, 18, rue Saint-Denis, 75001 PARIS

## Description

La présente invention a pour objet un procédé et un dispositif de fabrication de condensateurs mères par enroulement en spirale. On connaît de la demande de brevet français FR-A-2 011 553 publiée le 6 mars 1970 un procédé de fabrication de condensateurs feuilletés par bobinage en spirale sur un rouleau, avec interposition de couches intercalaires sans effet capacitif entre plusieurs des couches diélectriques et des armatures qui forment un bloc, de manière que ces couches séparatrices ou intercalaires divisent le bloc en plusieurs condensateurs mères superposés. On recouvre ensuite complètement, avec un métal de contact, les bords latéraux des couches et on sépare enfin les condensateurs mères destinés à donner ensuite par découpage des condensateurs individuels.

On connaît aussi par DE-C3-24 24 368 la possibilité de prévoir une fente dans les intercalaires pour laisser passer le film de condensateur, ce qui pourrait permettre d'atteindre relativement facilement une grande précision également dans le cours d'une réalisation automatique. Dans DE-C3- 2541111 est décrite la possibilité de faire commencer et terminer les intercalaires toujours au même endroit.

L'introduction de l'intercalaire peut être réalisée manuellement. Une telle opération prend du temps et d'autre part nécessite la présence d'un opérateur entraîné.

La présente invention a pour objet un procédé et un dispositif ne présentant pas les inconvénients précités.

L'invention a pour objet un procédé de fabrication de condensateurs mères superposés selon la revendication 1.

L'invention a également pour objet un procédé de fabrication de condensateurs mères superposées, selon la revendication 2.

L'opération d'interposition d'un intercalaire peut comporter une opération de relèvement d'un galet presseur des films en vue de la présentation de l'intercalaire sous celui-ci. Elle peut comporter une étape de découpage de l'intercalaire. Ledit découpage peut être réalisé avec une longueur croissant linéairement avec le rayon de la couche externe de l'enroulement, de telle sorte que les bords arrière des intercalaires successifs se trouvent alignés suivant un rayon de la roue. Le dispositif d'interposition peut porter un dispositif de coupe et une pince mobile d'entraînement de l'intercalaire, le dispositif d'interposition peut comporter des cames formant butée avant et arrière, et l'étape de découpage met alors en oeuvre les étapes de mettre en rotation la roue suivant une fraction de tour, d'arrêter de nouveau la roue, de découper l'intercalaire, le dispositif d'interposition étant sur sa butée avant, et de mettre de nouveau en rotation la roue, et le profil des cames est choisi de manière que l'intercalaire soit coupé par le dispositif de coupe à une longueur telle qu'après enroulement, les bords arrière des intercalaires successifs se situent suivant un même rayon de la roue.

La présentation de l'intercalaire peut être avantageusement effectuée avec un dépassement du point où celle-ci est tangente à la couche externe de l'enroulement, de telle sorte qu'un segment de l'intercalaire se trouve plaqué par le galet presseur en vue d'amorcer l'enroulement.

Selon un mode préféré, le dépassement est proportionnel au rayon de la couche externe de l'enroulement, de telle sorte que les bords d'entrée des intercalaires successifs se trouvent alignés suivant un rayon de la roue. Le déplacement du dispositif d'interposition entre la position arrière et la position avant peut consister alors à déplacer un premier moyen selon une course donnée entre une butée arrière et une butée avant, et à prolonger le déplacement par un second moyen porté par le premier, jusqu'à une butée avant constituée par une came de manière à réaliser ledit déplacement proportionnel, l'intercalaire étant entraîné par une pince mobile portée par le second moyen, la pince mobile étant à cet effet en position fermée. Le déplacement du dispositif d'interposition entre la position avant et la position arrière peut consister alors à déplacer le second et le premier moyen vers leur butée arrière en maintenant la pince mobile ouverte.

L'invention concerne également un dispositif de fabrication de condensateurs mères superposés selon la revendication 9.

Il peut comporter un galet presseur de l'empilement et le point où les films rejoignent l'enroulement est le point de contact entre le galet presseur et l'enroulement.

Selon un mode de réalisation avantageux, le galet presseur est associé à un axe relié à un dispositif d'application de la force de pression du galet, et solidaire du dispositif compensateur, ledit capteur est agencé pour mesurer la position angulaire dudit axe et ledit asservissement est agencé pour déplacer le dispositif compensateur selon une direction donnée de telle sorte que ledit axe conserve une position angulaire donnée.

Le capteur peut être constitué par deux barrières photoélectriques disposées de part et d'autre de la position angulaire donnée dudit axe et l'asservissement être du type tout ou rien.

Le dispositif d'application de la force de pression peut être un moteur pas à pas et ledit capteur, un circuit de décodage de la position angulaire du moteur pas à pas.

Le dispositif d'interposition peut comporter un premier moyen portant une pince mobile d'entraînement de l'intercalaire, un dispositif de coupe et un dispositif d'introduction d'intercalaire, et une pince fixe peut être portée par le bâti du dispositif.

Selon une variante préférée, le dispositif d'interposition comporte un premier moyen mobile entre une butée avant et une butée arrière, et portant un dispositif de coupe. ainsi qu'un second moyen mobile entre une butée avant et une butée arrière. Le second moyen porte une pince d'entraînement de l'intercalaire et un dispositif d'introduction d'intercalaire. Une pince fixe peut être portée par le bâti du dispositif. La butée avant du second moyen peut être une came dont l'angle d'inclinaison est choisi de manière que le bord d'entrée des intercalaires successifs soit disposé sur un même rayon de la roue. Les butées du premier moyen peuvent être alors des cames dont l'angle d'inclinaison est choisi de manière que l'intercalaire soit coupé par le dispositif de coupe à une longueur telle qu'après enroulement, les bords arrière des intercalaires successifs se trouvent suivant un même rayon de la roue.

Au moins l'un desdits moyens peut être un coulisseau.

L'invention sera mieux comprise à la lecture de la description qui va suivre donnée à titre d'exemple non limitatif, en se reportant aux dessins ci-annexés où:

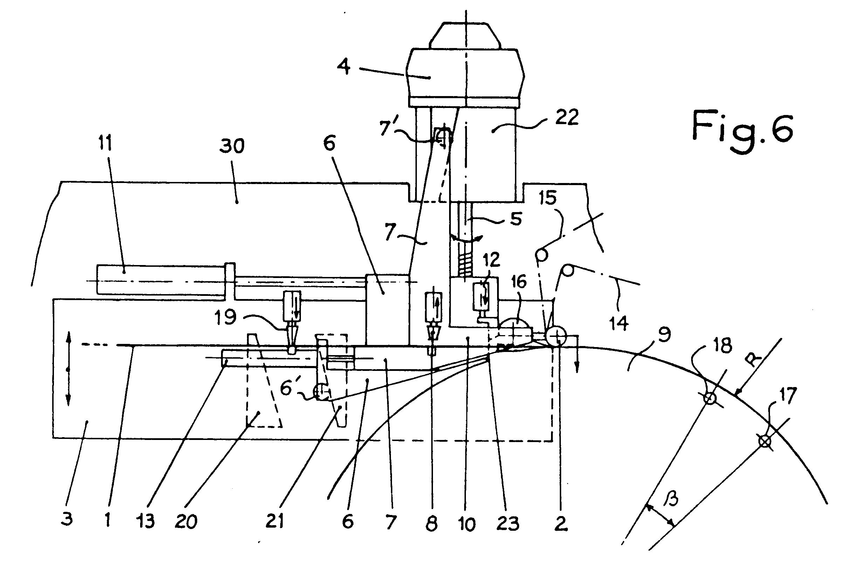

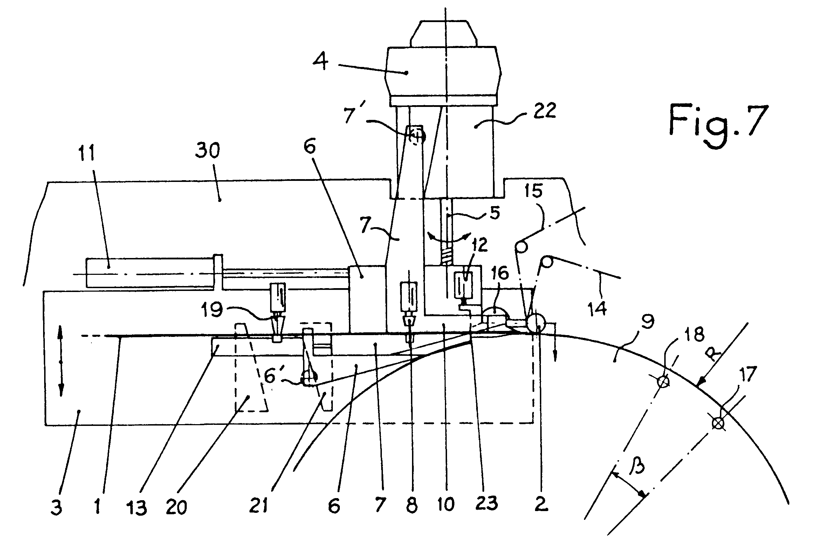

- les figures 1 à 7 représentent un dispositif suivant un mode de réalisation de l'invention selon les différentes étapes d'une séquence d'interposition d'un intercalaire,
- la figure 8a illustre le calcul des angles des cames et la figure 8b est un détail de la figure 8a, montrant le positionnement de la roulette 2,
- la figure 9 représente des intercalaires après leur interposition.

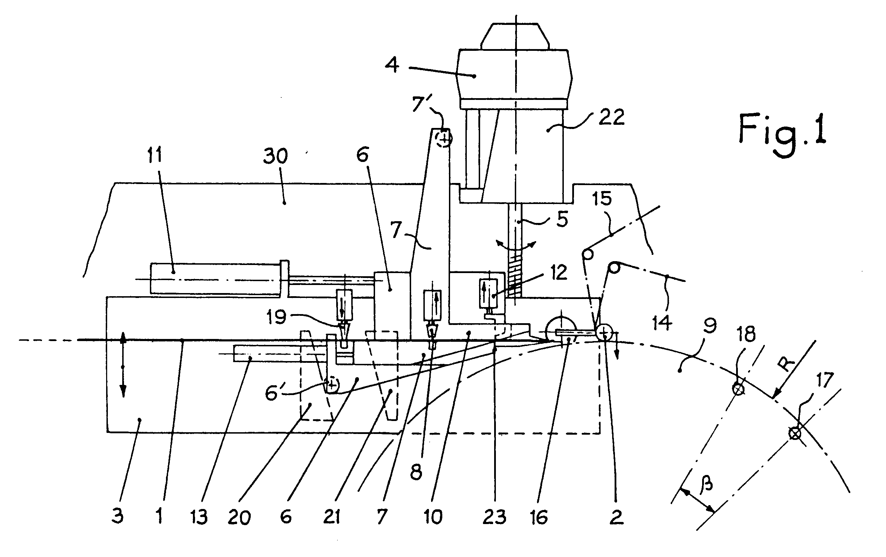

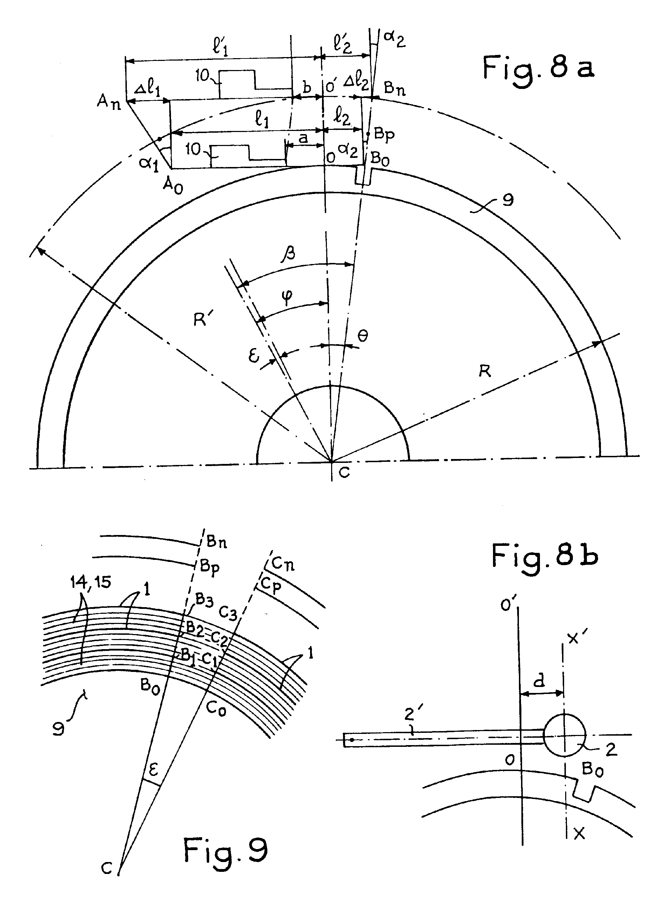

Selon la figure 1, qui représente un mode de réalisation du dispositif d'interposition périodique d'un intercalaire, permettant le bobinage en spirale de deux films 14 et 15 sur une roue 9, l'intercalaire 1 est alimenté à partir d'un ruban porté par une bobine non représentée, En variante, des intercalaires 1 peuvent être prédécoupés à des longueurs voulues. Les films 14 et 15 sont amenés au niveau d'un galet presseur 2 associé à un dispositif 16 d'application d'une force de pression, de manière à presser à chaque instant les films 14 et 15 sur les tours précédents de l'enroulement. Les films 14 et 15 sont par ailleurs délivrés avec une tension constante qui permet d'assurer un enroulement homogène sur la roue 9. La position angulaire du bras 2' (voir figure 8b) associé au galet presseur 2 est déterminé par un dispositif de mesure qui peut être constitué de deux barrières opto-électronique disposées de part et d'autre d'une position angulaire donnée du bras 2'. Selon un mode de réalisation préféré, le dispositif 16 est un moteur pas à pas appliquant un couple constant au bras 2', et la mesure de position angulaire est réalisée par décodage de la position angulaire du moteur pas à pas. La rotation de la roue 9 est interrompue après un nombre donné de tours, de manière à permettre l'interposition d'un intercalaire 1, par un dispositif d'interposition porté par un dispositif compensateur mobile, en l'occurrence un coulisseau principal 3.

La position du coulisseau principal 3 est asservie à la position de la couche externe de l'enroulement sur la roue 9. Le dispositif 16 d'application d'une force et le dispositif de mesure étant portés par le coulisseau principal 3, ce dernier est asservi en position le long d'un axe de telle sorte que la position angulaire du bras 2' reste constante.

Le dispositif d'interposition périodique d'un intercalaire porté par le coulisseau principal 3 est susceptible de se déplacer entre une position arrière dite de repos et une position avant où l'intercalaire 1 est présenté au point où les films rejoignent l'enroulement, à savoir dans le cas d'espèce au niveau du galet presseur 2. Le dispositif d'interposition est constitué par un premier moyen mobile entre deux butées, par exemple un coulisseau primaire 6, et le cas échéant, un second moyen mobile entre deux butées, par exemple un coulisseau secondaire 7 dont la fonction sera explicitée plus en détail dans la suite de la description. Le coulisseau principal 3 supporte, outre le coulisseau primaire 6 et le coulisseau secondaire 7, une pince fixe 19. Le coulisseau primaire 6 supporte le coulisseau secondaire 7 et un dispositif de coupe 12. Le coulisseau secondaire 7 comporte un guide d'intercalaire 10, destiné à guider l'intercalaire 1 lors de son introduction au niveau du galet presseur 2, et supporte une pince mobile 8.

Le coulisseau principal 3 est entraîné par un moteur 4 couplé à un système vis-écrou 5, et les coulisseaux primaire 6 et secondaire 7 sont entraînés chacun par un verin, respectivement 11 et 13. Le coulisseau primaire 6 est mobile entre une butée arrière 20 et une butée avant 21 solidaires du bâti 30 du dispositif. Ces butées 20, 21 sont avantageusement constituées par des cames. Un doigt 6' porté par le coulisseau 6 coopère à cet effet avec les butées 20 et 21.

Le coulisseau secondaire 7 est mobile entre une butée arrière 23 portée par le coulisseau primaire 6 et une butée avant 22 solidaire du bâti 30 du dispositif. La butée avant 22 est constituée par une came. Un doigt 7' porté par le coulisseau 7 coopère à cet effet avec la butée 22.

Selon la figure 1, le dispositif d'introduction d'un intercalaire est en position dite de repos, qui permet aux films 14 et 15 d'être enroulés sur la roue 9. Les coulisseaux primaire 6 et secondaire 7 sont en butée arrière respectivement en 20 et en 23. La pince fixe 19 est fermée pour maintenir en place l'intercalaire 1. La pince mobile 8 est ouverte. Dans cette position de repos, le système vis-écrou 5 entraîne en translation le coulisseau principal 3 de telle sorte que le bras 2' soit maintenu en permanence horizontal pendant le bobinage des films 14 et 15.

La butée arrière 20 du coulisseau primaire est constituée par une came linéaire portée par le bâti du dispositif. Cette came est inclinée de telle sorte que le coulisseau primaire 6 en butée arrière s'éloigne de la roue 9 lorsque le coulisseau principal 3 s'éloigne du centre de la roue 9. Plus spécifiquement, l'angle d'inclinaison des cames 20 et 21 est choisi pour compenser la différence de longueur de la circonférence de la couche extérieure de la roue 9 entre deux positions de rotation de la roue 9 repérées par des capteurs 17 et 18. D'autre part. la came 22 a pour fonction de contribuer à une meilleure introduction de l'intercalaire au niveau du galet 2. L'introduction de l'intercalaire 1 est prolongée au-delà du point où l'intercalaire 1 arrive tangentiellement à la roue, d'une longueur correspondant à un angle donné de rotation de la roue 9, de telle sorte que toutes les amorces des intercalaires successifs soient alignées sur un même rayon $OB_o$ de la roue 9 (voir figures 8a et 9). La compensation de cette longueur en fonction du diamètre de la couche extérieure est réalisée par la came linéaire 22. Cette disposition permet. en disposant le galet 2 un peu au-delà du point où l'intercalaire 1 arrive tangente à la roue, de plaquer l'intercalaire 1 sur la roue au début de son enroulement, ainsi qu'il sera expliqué plus en détail dans la suite de la description. ceci permet d'amorcer sans glissement l'enroulement de l'intercalaire.

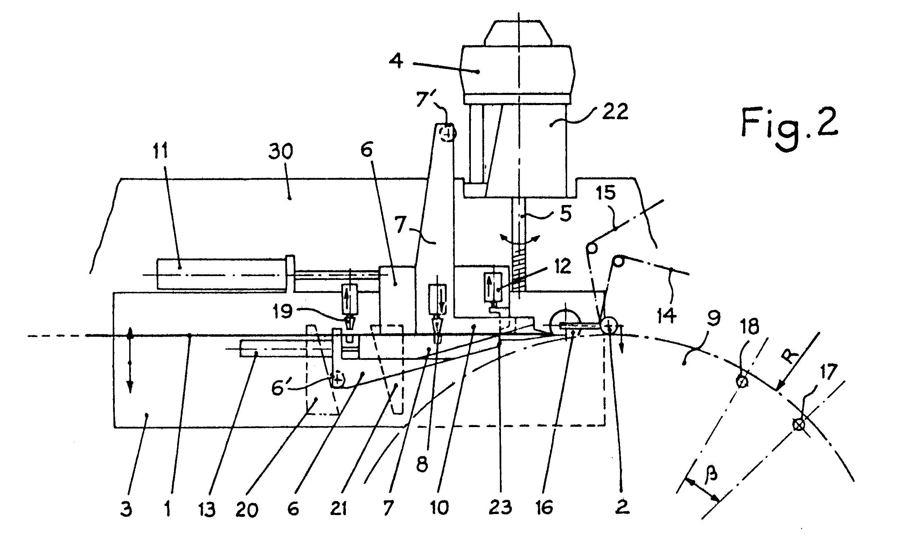

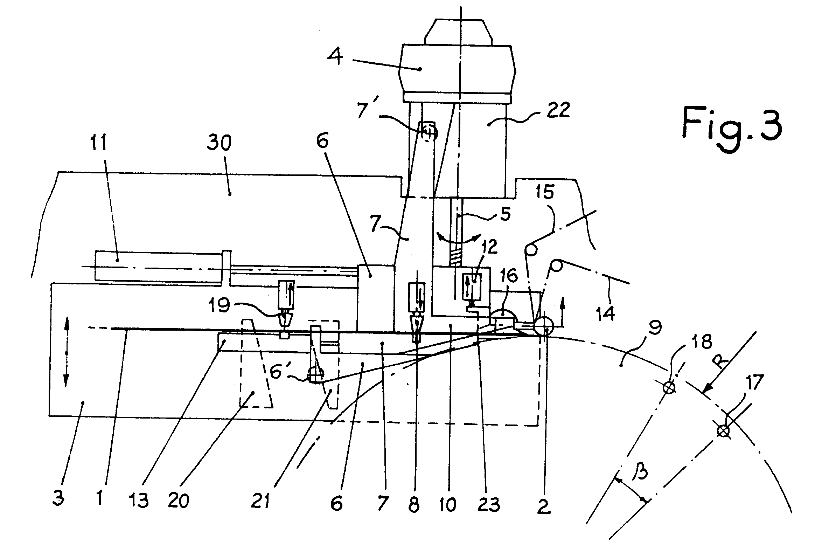

Selon la figure 2, la pince fixe 19 est ouverte et la pince mobile 8 est fermée. Le galet presseur 2 est relevé et l'asservissement du coulisseau principal 3 par le moteur 4 et le système vis-écrou 5 est interrompu. Un repère situé sur la roue 9 est indexé en une position repérée par le capteur 17. Le coulisseau primaire 6 est ensuite translaté (voir figure 3) vers sa butée avant 21, et l'intercalaire 1 est entraîné par la pince mobile 8 sur une course égale à la course du coulisseau primaire 6. Comme l'angle d'inclinaison des cames 20 et 21 est le même, cette course est constante quel que soit le diamètre de la couche extérieure des films 14 et 15. L'extrémité de l'intercalaire 1 est alors située approximativement en contact tangentiel avec la couche extérieure des films 14 et 15.

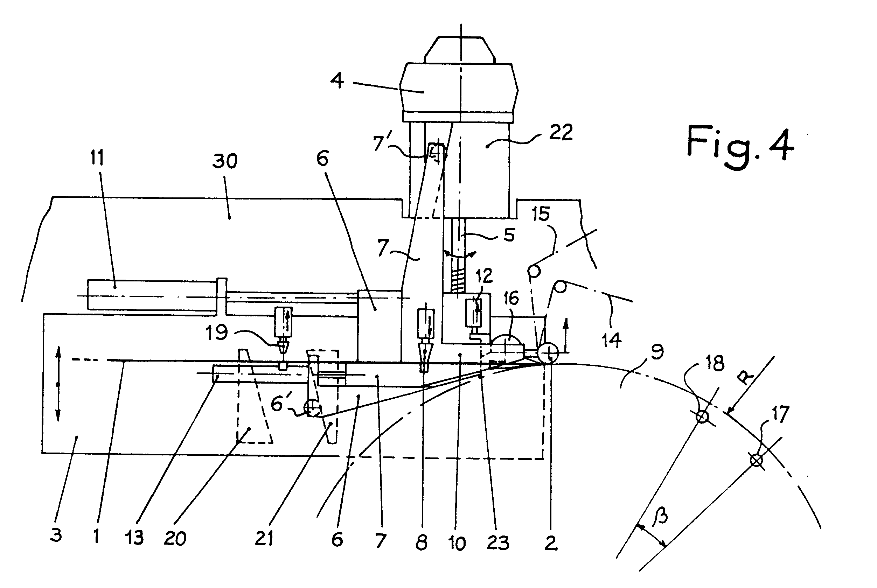

Le coulisseau secondaire 7 est ensuite translaté (voir figure 4) vers sa butée avant 22 et l'intercalaire 1 est par conséquent entraîné par la pince mobile 8 sur une course complémentaire qui amène son extrémité en dessous du galet 2.

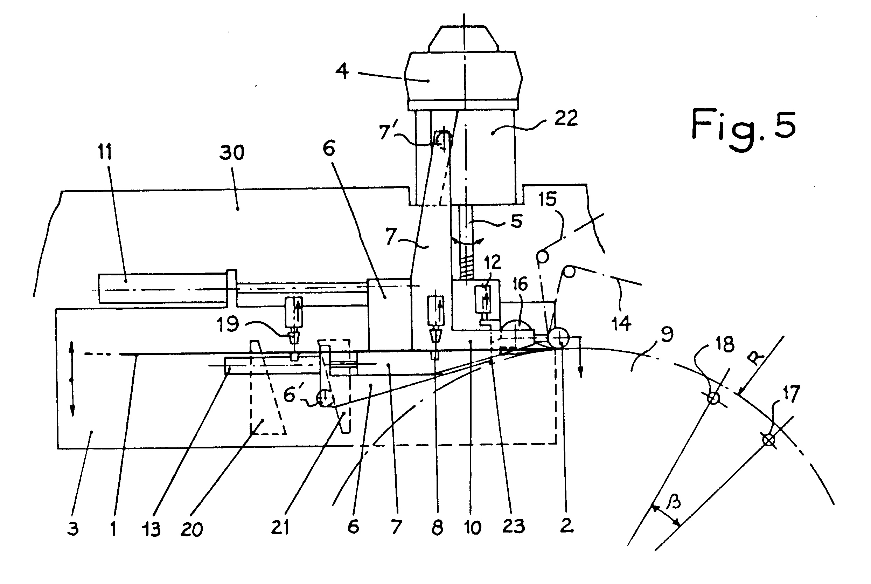

Dans la phase suivante (voir figure 5), le galet presseur est de nouveau abaissé et se trouve donc en appui sur l'intercalaire 1 et les films 14 et 15, et l'asservissement en translation du coulisseau principal 3 est rétabli. La pince mobile 8 est ensuite ouverte.

L'enroulement de l'intercalaire 1 sur la roue 9 est ensuite réalisé. La roue 9 tourne d'un angle $2\pi-\beta$ jusqu'à ce que son repère soit indexé en une position repérée par un capteur 18. Lorsque la roue 9 se trouve dans cette dernière position, la pince fixe 19 est fermée et le dispositif de coupe 12 porté par le coulisseau primaire 6 est actionné.

Le coulisseau secondaire 7 est ensuite rappelé sur sa butée arrière 23 (voir figure 7) en laissant en place l'intercalaire 1 puisque la pince fixe 19 est fermée et la pince mobile 8 ouverte. On revient en position de repos avec rappel du coulisseau primaire 6 vers sa butée arrière 20 (figure 1). La roue 9 est entraînée de nouveau en rotation et enroule donc la portion subsistante d'intercalaire 1 et un nouvel empilement de couches des films 14 et 15.

On comprendra que, comme le coulisseau primaire 6 qui porte le dispositif de coupe 12 a été rappelé dans sa course vers la butée arrière d'une quantité donnée indépendante du diamètre des couches externes des films 14 et 15, l'extrémité de l'intercalaire 1 va se trouver dépasser du guide d'intercalaire 10 d'une quantité donnée elle-même constante.

En se reportant aux figures 8a, 8b et 9, on va maintenant préciser la manière de définir les angles des cames. Tout d'abord, on définit l'angle de la came 22. La roue 9 présente un diamètre extérieur R. Le rayon R' est le rayon maximal théorique des couches enroulées. Lorsque le coulisseau primaire 6 est sur sa butée avant 21, l'intercalaire 1 arrive tangent aux couches externes des films en un point situé sur un segment 00', prolongement d'un rayon CO de la roue 9 de centre C. On a CO = R et CO' = R'. 00' est perpendiculaire à la direction de déplacement du coulisseau primaire 6.

Le coulisseau primaire 6 amène donc l'extrémité de l'intercalaire 1 au niveau du segment 00'. Le coulisseau secondaire 7 prolonge ce mouvement d'une quantité variant entre $1_2$ et $1'_2$ (avec $1_2 = OB_o$ et $1'_2 = OB_n$), jusqu'à un segment $B_o B_n$ d'un rayon de la roue 9 faisant un angle $\theta$ avec le précédent. Le point $B_p$ correspond au $p^{ième}$ intercalaire. Si on appelle $\alpha_2$ l'inclinaison de la came 22 par rapport au rayon 00', l'accroissement $\delta 1_2$ de longueur d'intercalaire sera égal à $\delta R\, Tg\, \alpha_2$ où $\delta R$ est l'accroissement du rayon de la couche extérieure. Pour compenser l'angle $\theta$, il faut $\delta 1_2 = \theta\, \delta R$, d'où $tg\, \alpha_2 = \theta$. Il en résulte que l'inclinaison de la came 22 par rapport au rayon 00' sera en première approximation égale à $\theta$, puisque $\theta$ est petit.

Comme représenté à la figure 8b, l'axe XX' parallèle à 00', sur lequel se déplace l'axe du galet presseur 2, est décalé d'une distance d du segment 00' du côté du segment $OB_o$. Lorsque le galet 2 est abaissé, le $p^{ième}$ intercalaire 1 est plaqué sur les couches extérieures des films 14 et 15 sur quasiment toute la longueur du segment $OB_p$, ce qui facilite son entraînement ultérieur par la roue 9.

Comme on l'a décrit plus haut. le $p^{ième}$ intercalaire 1 une fois introduit jusqu'au point $B_p$, la roue est mise en rotation d'un angle égal à $2\pi-\beta$, après quoi l'intercalaire 1 est coupé.

En ce qui concerne maintenant l'inclinaison des cames 20 et 21, celle-ci doit être telle qu'elle compense l'accroissement de la circonférence correspondant à la rotation de la roue 9 de l'angle $\beta$ compris entre la coupe et l'enroulement complet de l'intercalaire 1.

Ceci permet d'assurer la coupe de l'intercalaire 1 à une longueur permettant d'aligner les bords arrière ($C_1$, $C_2$, ..., $C_p$, ..., $C_n$) de celui-ci après enroulement (voir figure 9). La came 22 a déjà introduit une correction de longueur correspondant à un angle $\theta$. La compensation sera obtenue donc en compensant d'un angle $\varphi = \beta - \theta$.

Comme représenté figure 9, les bords $B_2$, $B_2$, $B_3$, ..., $B_n$ et $C_1$, $C_2$, $C_3$, ..., $C_n$ des intercalaires 1 sont de préférence situés sur deux rayons faisant entre eux un angle $\varepsilon$ de manière à laisser passer un outil de coupe permettant par section transversale de séparer les condensateurs mères empilés de la roue 9.

Par conséquent, et pour tenir compte de l'écart angulaire, l'angle à compenser sera donc en toute rigueur:

$$\varphi - \varepsilon = \beta - \theta - \varepsilon$$

Il vient $\delta R \, tg \, \alpha_1 = \delta 1_1$ et $\delta 1_1 = (\beta - \theta - \varepsilon) \, \delta R$

L'angle $\alpha_1$ des cames 20 et 21 (voir figure 10b) est alors déterminé par:

$$tg \alpha_1 = \beta - \theta - \varepsilon$$

soit $\alpha_1 = Arc \, tg(\beta - \theta - \varepsilon)$.

L'invention ne se limite pas au mode de réalisation décrit et représenté. Aussi les butées des coulisseaux ne sont des cames que si on souhaite compenser les variations de rayon de l'empilement des films. Enfin, le coulisseau secondaire 7 peut être omis puisque sa fonction n'est que de faciliter la présentation du bord avant de l'intercalaire 1.

## Revendications

1. Procédé de fabrication de condensateurs mères superposés, mettant en oeuvre un enroulement en spirale sur une roue de films métallisés ainsi qu'une interposition périodique, au bout d'un nombre donné de tours d'enroulement et au moyen d'un dispositif d'interposition, d'intercalaires présentant un bord d'entrée et un bord arrière, caractérisé en ce que l'opération d'interposition d'un intercalaire (1) est automatisée et comporte les étapes suivantes qui sont effectuées par une machine adaptée à arrêter la roue (9), déplacer le dispositif d'interposition (6,7) depuis une position arrière dite de repos jusqu'à une position ayant de présentation tangentielle de l'intercalaire (1) qui est présenté par son bord d'entrée toujours à la même position angulaire relative à l'axe de la roue, mettre de nouveau la roue (9) en rotation pour réaliser l'interposition de l'intercalaire (1), et déplacer le dispositif d'interposition de sa position avant vers sa position arrière de manière à poursuivre l'enroulement des films métallisés (14, 15), en ce que le déplacement du dispositif d'interposition dans le sens d'insertion tangentielle de sa position arrière vers sa position avant est asservi automatiquement à la variation du diamètre de l'enroulement pour assurer l'alignement des bords d'entrée des intercalaires sur le prolongement d'un premier rayon (CBo) de la roue, et en ce que les intercalaires sont prédécoupés, leurs longueurs croissant linéairement avec le rayon de la couche externe de l'enroulement, de telle sorte que les bords arrière des intercalaires successifs se trouvent alignés sur le prolongement d'un second rayon (CCo) de la roue, aucune portion d'intercalaire ne se trouvant dans l'angle orienté (CBo, CCo) mesuré positivement dans le sens de rotation et inférieur à $2\pi$ radians.

2. Procédé de fabrication de condensateurs mères superposés, mettant en oeuvre un enroulement en spirale sur une roue de films métallisés ainsi qu'une interposition périodique, au bout d'un nombre donné de tours d'enroulement et au moyen d'un dispositif d'interposition, d'intercalaires présentant un bord d'entrée et un bord arrière, caractérisé en ce que, les intercalaires étant obtenus par section d'un ruban, l'opération d'interposition d'un intercalaire (1) est automatisée et comporte les étapes suivantes qui sont effectuées par une machine adaptée à arrêter la roue (9), déplacer le dispositif d'interposition (6,7) depuis une position arrière dite de repos vers une position avant de présentation tangentielle du ruban qui est présenté par son bord d'entrée toujours à la même position angulaire relative à l'axe de la roue, mettre de nouveau la roue (9) en rotation pour réaliser l'interposition de l'intercalaire (1), arrêter de nouveau la roue (9) après qu'elle ait tourné d'un angle déterminé ($2\pi - \beta$) radians, mettre en oeuvre un dispositif de coupe (12) solidaire du dispositif d'interposition (6,7) pour séparer l'intercalaire (1) du reste du ruban, déplacer le dispositif d'interposition de sa position avant vers sa position arrière, et mettre à nouveau la roue (9) en rotation de manière à poursuivre l'enroulement des films métallisés (14, 15), et en ce que le déplacement du dispositif d'interposition dans le sens d'insertion tangentielle est asservi automatiquement à la variation du diamètre de l'enroulement pour assurer l'alignement des bords d'entrée des intercalaires sur un premier rayon (CBo) de la roue ainsi que l'alignement de leurs bords arrière sur le prolongement d'un second rayon (CCo) de la roue, l'angle ($\beta$) étant tel qu'aucune portion d'intercalaire ne se trouve dans l'angle orienté (CBo, CCo) mesuré positivement dans le sens de rotation et inférieur à $2\pi$ radians.

3. Procédé selon la revendication 2, caractérisé en ce que le dispositif d'interposition porte également une pince mobile (8) d'entraînement de l'intercalaire (1) qui est fermée lors du déplacement vers la position avant du dispositif d'interposition, et des cames formant butée avant (21) et arrière (20), en ce que lors du découpage de l'intercalaire, le dispositif d'interposition est sur sa butée avant (21), et en ce que le profil des cames est choisi de manière que l'intercalaire (1) soit coupé par le dispositif de coupe (12) à une longueur telle, qu'après enroulement, les bords arrière des intercalaires (1) successifs se situent suivant un même rayon de la roue (9).

4. Procédé selon l'une quelconque des revendications 1 à 3, caractérisé en ce que l'opération d'interposition d'un intercalaire comporte une opération de relèvement d'un galet presseur (2) des films (14, 15) en vue de la présentation de l'intercalaire (1) sous celui-ci.

5. Procédé selon l'une des revendications 1 à 4, caractérisé en ce que la présentation de l'intercalaire (1) est effectuée avec un dépassement du point où celui-ci est tangent à la couche externe de l'enroulement, de telle sorte qu'un segment de l'intercalaire (1) se trouve plaqué par le galet presseur (2) en vue d'amorcer l'enroulement.

6. Procédé selon la revendication 5, caractérisé en ce que ledit dépassement est proportionnel au rayon de la couche externe de l'enroulement, de telle sorte que les bords d'entrée des intercalaires (1) successifs se trouvent alignés suivant un rayon de la roue (9).

7. Procédé selon la revendication 6, caractérisé en ce que le déplacement du dispositif d'interposition (6, 7) entre la position arrière et la position avant consiste à déplacer un premier moyen (6) selon une course donnée entre une butée arrière (20) et une butée avant (21), et à prolonger le déplacement par un second moyen (7) porté par le premier moyen (6), jusqu'à une butée avant (22) constituée par une came profilée de manière à réaliser ledit déplacement proportionnel, l'intercalaire (1) étant entraîné par une pince mobile (8) portée par le second moyen (7), la pince mobile (8) étant à cet effet fermée.

8. Procédé selon la revendication 7, caractérisé en ce que le déplacement du dispositif d'interposition entre la position avant et la position arrière consiste à déplacer le second (7) et le premier moyen (6) vers leur butée arrière (20, 23) en maintenant la pince mobile (8) ouverte.

9. Dispositif de fabrication de condensateurs mères superposés comportant un dispositif d'enroulement en spirale sur une roue de films métallisés, ainsi qu'un dispositif d'interposition périodique d'un intercalaire au bout d'un nombre donné de tours d'enroulement, destiné à la mise en oeuvre du procédé suivant l'une des revendications 1 à 8 , caractérisé en ce que le dispositif d'interposition périodique est porté par un dispositif compensateur mobile (3) et est susceptible de se déplacer automatiquement entre une position arrière dite de repos et une position avant où l'intercalaire est tangentiellement présenté au point où les films (14, 15) rejoignent l'enroulement, le bord d'entrée de l'intercalaire dans la position avant étant présenté toujours à la même position angulaire relative à l'axe de la roue, et en ce qu'il comporte un capteur de la position de la couche externe de l'enroulement sur la roue et un asservissement de la position du dispositif compensateur (3) à la position de ladite couche externe.

10. Dispositif selon la revendication 9, caractérisé en ce qu'il comporte un galet (2) presseur de l'empilement et en ce que le point où les films (14, 15) rejoignent l'enroulement est le point de contact entre le galet presseur (2) et l'enroulement.

11. Dispositif selon la revendication 10, caractérisé en ce que le galet presseur (2) est associé à un bras (2') relié à un dispositif (16) d'application de la force de pression du galet, solidaire du dispositif compensateur (3), en ce que ledit capteur est agencé pour mesurer la position angulaire dudit bras (2') et en ce que ledit asservissement est agencé pour déplacer le dispositif compensateur (3) de telle sorte que ledit bras (2') conserve une position angulaire donnée.

12. Dispositif selon la revendication 11, caractérisé en ce que le capteur est constitué par deux barrières photo-électriques disposées de part et d'autre de la position angulaire donnée dudit bras (2') et en ce que l'asservissement est du type tout ou rien.

13. Dispositif selon la revendication 11, caractérisé en ce que ledit dispositif (16) d'application de la force de pression est un moteur pas à pas et en ce que ledit capteur est un circuit de décodage de la position angulaire dudit moteur pas à pas.

14. Dispositif selon l'une des revendications 9 à 13, caractérisé en ce que son bâti porte une pince fixe (19).

15. Dispositif selon l'une des revendications 9 à 14, caractérisé en ce que le dispositif d'interposition (6, 7) comporte un premier moyen (6) portant une pince mobile (8) d'entraînement de l'intercalaire, un dispositif de coupe (12) et un dispositif d'introduction d'un intercalaire (10).

16. Dispositif selon l'une des revendications 9 à 14, caractérisé en ce que le dispositif d'interposition comporte un premier moyen (6) mobile entre une butée avant (21) et une butée arrière (20) et portant un dispositif de coupe (12), et un second moyen (7) mobile entre une butée avant (22) et une butée arrière (23), et en ce que le second moyen (7) porte une pince mobile (8) d'entraînement de l'intercalaire (1) ainsi qu'un dispositif d'introduction d'intercalaire (10).

17. Dispositif selon la revendication 16, caractérisé en ce que la butée avant (22) du second moyen (7) est une came dont le profil ($\alpha_2$) est choisi de manière à positionner les bords d'entrée des intercalaires (1) successifs sur un même rayon de la roue (9).

18. Dispositif selon l'une des revendications 15 à 17, caractérisé en ce que les butées (20, 21) du premier moyen (6) sont des cames dont le profil ($\alpha_1$) est choisi de manière que l'intercalaire (1) soit coupé par le dispositif de coupe (12) à une longueur telle qu'après enroulement, les bords arrière des intercalaires (1) successifs se trouvent suivant un même rayon de la roue (9).

19. Dispositif selon l'une des revendications 9 à 18, caractérisé en ce que du moins l'un desdits moyens est un coulisseau (6, 7).

**Patentansprüche**

1. Verfahren zur Herstellung von überlagerten Mutterkondensatoren, bei dem eine Spiralwicklung auf eine Metallfolientrommel sowie eine periodische Einfügung von Zwischenlagen, die eine Vorderkante und eine Hinterkante aufweisen, nach eine vorgegebenen Anzahl von Wickelumdrehungen und mit Hilfe einer Einfügevorrichtung angewandt werden, dadurch gekennzeichnet, daß der Arbeitsgang der Einfügung einer Zwischenlage (1) automatisiert ist und die folgenden, von einer zum Anhalten der Trommel (9) geeigneten Maschine ausgeführten Schritte enthält: Verstellen der Einfügevorrichtung (6, 7) aus einer sogenannten hinteren Ruhestellung in eine sogenannte vordere Stellung des tangentialen Anbietens der Zwischenlage (1) mit ihrer Vorderkante in immer der gleichen Winkelposition relativ zur Achse der Trommel, erneutes Versetzen der Trommel (9) in Drehung zum Bewirken der Einfügung der Zwischenlage (1) und Verstellen der Einfügevorrichtung aus der vorderen Stellung in die hintere Stellung, so daß die Wicklung der Metallfolien (14, 15) fortgesetzt wird, daß die Verstellung der Einfügevorrichtung in Richtung des tangentialen Einsetzens von ihrer hinteren Stellung in Richtung ihrer vorderen Stellung der Durchmesseränderung der Wicklung automatisch nachgesteuert wird, um die Ausrichtung der Zwischenlagenvorderkanten auf die Verlängerung eines ersten Radius (CBo) der Trommel zu garantieren, und daß die Zwischenlagen vorgeschnitten werden, wobei ihre Länge linear mit dem Radius der Außenschicht der Wicklung wächst derart, daß die Hinterkanten der aufeinanderfolgenden Zwischenlagen nach der Verlängerung eines zweiten Radius (CCo) der Trommel ausgerichtet sind, wobei sich kein Teil der Zwischenlage in einem Drehwinkel (CBo, CCo) in der positiv gemessenen Drehrichtung und unter einem Bogenwinkel von $2\pi$ befindet.

2. Verfahren zur Herstellung von überlagerten Mutterkondensatoren, bei dem eine Spiralwicklung auf eine Metallfolientrommel sowie eine periodische Einfügung von Zwischenlagen, die eine Vorderkante und eine Hinterkante aufweisen, nach eine vorgegebenen Anzahl von Wickelumdrehungen und mit Hilfe einer Einfügevorrichtung angewandt wird, dadurch gekennzeichnet, daß die Zwischenlagen durch ein Zuschneiden eines Bandes gewonnen werden, daß der Arbeitsgang des Einfügens einer Zwischenlage (1) automatisiert ist und die folgenden, von einer zum Anhalten der Trommel (9) geeigneten Maschine ausgeführten Schritte enthält: Verstellen der Einfügevorrichtung (6, 7) aus einer sogenannten hinteren Ruhestellung in eine sogenannte vordere Stellung des tangentialen Anbietens des Bandes mit seiner Vorderkante immer in der gleichen Winkelposition relativ zur Achse der Trommel, erneutes Versetzen der Trommel (9) in Drehung, um das Einfügen einer Zwischenlage (1) zu bewirken, erneutes Anhalten der Trommel (9) nach ihrer Drehung um einen vorbestimmten Bogenwinkel ($2\pi$-,$\beta$), Anwenden einer mit der Zwischenfügevorrichtung (6, 7) zusammengebauten Abschneidevorrichtung (12), um die Zwischenlage (1) vom übrigen Band zu trennen, Verstellen der Einfügevorrichtung aus der vorderen Stellung in die hintere Stellung und erneutes Versetzen der Trommel (9) in Drehung, um das Aufwickeln der Metallfolie (14, 15) fortzusetzen, und daß die Verstellung der Einfügevorrichtung in Richtung des tangentialen Einsetzens der Durchmesseränderung der Wicklung automatisch nachgesteuert wird, um die Ausrichtung der Zwischenlagenvorderkanten auf die Verlängerung eines ersten Radius (CBo) der Trommel sowie die Ausrichtung ihrer Hinterkanten auf die Verlängerung eines zweiten Radius (CCo) der Trommel zu garantieren, wobei der Winkel ($\beta$) so

gewählt ist, daß sich kein Teil der Zwischenlage in einem Drehwinkel (CBo, CCo) befindet, der positiv in der Drehrichtung gemessen und kleiner als ein Bogenwinkel von $2\pi$ ist.

3. Verfahren nach Anspruch 2, dadurch gekennzeichnet, daß die Einfügevorrichtung ferner eine bewegliche Zange (8) zur Mitnahme der Zwischenlage (1), die zum Zeitpunkt der Verstellung der Einfügevorrichtung in die vordere Stellung geschlossen ist, und Nocken, die einen vorderen (21) und einen hinteren (20) Anschlag bilden, trägt, daß zum Zeitpunkt des Abschneidens der Zwischenlage die Einfügevorrichtung sich am vorderen Anschlag (21) befindet und daß die Konturen der Nocken so gewählt sind, daß die Zwischenlage (1) durch die Abschneidevorrichtung (12) in einer solchen Länge abgeschnitten wird, daß nach dem Aufwickeln die Hinterkanten der aufeinanderfolgenden Zwischenlagen (1) entlang einem gleichen Radius der Trommel (9) stehen.

4. Verfahren nach einem der Ansprüche 1 bis 3, dadurch gekennzeichnet, daß der Arbeitsgang des Einfügens einer Zwischenlage einen Arbeitsgang eines Wiederanhebens einer Druckrolle (2) für die Folien (14, 15) umfaßt, um die Zwischenlage (1) unter ihr anzubieten.

5. Verfahren nach einem der Ansprüche 1 bis 4, dadurch gekennzeichnet, daß das Anbieten der Zwischenlage (1) bewirkt wird mit einem Überschreiten der Stelle, an der sie die Außenschicht der Wicklung derart berührt, daß ein Abschnitt der Zwischenlage (1) durch die Druckrolle (2) angedrückt wird, um den Wicklungsanfang zu erhalten.

6. Verfahren nach Anspruch 5, dadurch gekennzeichnet, daß die Überschreitung proportional dem Radius der Außenschicht der Wicklung ist dergestalt, daß die Vorderkanten der aufeinanderfolgenden Zwischenlagen (1) längs eines Radius der Trommel (9) bündig sind.

7. Verfahren nach Anspruch 6, dadurch gekennzeichnet, daß die Verstellung der Einfügevorrichtung (6, 7) zwischen der hinteren Stellung und der vorderen Stellung in einer Verstellung einer ersten Vorrichtung (6) längs eines gegebenen Wegs zwischen einem hinteren Anschlag (20) und einem vorderen Anschlag (21) und in einem Weiterführen der Verstellung durch eine zweite, von der ersten Vorrichtung (6) getragenen Vorrichtung (7) bis zu einem vorderen Anschlag (22) besteht, der durch eine Konturnocke gebildet ist, um die proportionale Verstellung zu verwirklichen, wobei die Zwischenlage (1) durch eine von der zweiten Vorrichtung (7) getragene, bewegliche Zange (8) mitgenommen wird und die bewegliche Zange (8) zu diesem Zweck geschlossen ist.

8. Verfahren nach Anspruch 7, dadurch gekennzeichnet, daß die Verstellung der Einfügevorrichtung zwischen der vorderen Stellung und der hinteren Stellung in einer Verstellung der zweiten (7) und der ersten (6) Vorrichtung auf ihren hinteren Anschlag (20, 23) zu besteht, wobei die bewegliche Zange (8) offen gehalten wird.

9. Vorrichtung zur Herstellung von überlagerten Mutterkondensatoren mit einer Vorrichtung zum Spiralwickeln auf eine Metallfolientrommel sowie einer periodisch nach einer vorgegebenen Anzahl von Wickelumdrehungen wirkenden Einfügevorrichtung für Zwischenlagen zum Durchführen eines Verfahrens nach einem der Ansprüche 1 bis 8, dadurch gekennzeichnet, daß die periodisch wirkende Einfügevorrichtung durch eine bewegliche Ausgleichsvorrichtung (3) getragen wird und sich automatisch zwischen einer sogenannten hinteren Ruhestellung und einer vorderen Stellung verstellen kann, in der die Zwischenlage tangential an der Stelle angeboten wird, an der die Folien (14, 15) wieder auf die Wicklung treffen, wobei die Vorderkante der Zwischenlage in der vorderen Position immer in der gleichen Winkelposition relativ zur Achse der Trommel angeboten wird, und daß sie einen Lagesensor für die Außenschicht der Wicklung auf der Trommel und eine Lagenachsteuerung zur Nachsteuerung der Ausgleichsvorrichtung (3) an die Lage der Außenschicht umfaßt.

10. Vorrichtung nach Anspruch 9, dadurch gekennzeichnet, daß sie eine Druckrolle (2) für den Stapel umfaßt und daß die Stelle, an der die Folien (14, 15) auf die Wicklung treffen, die Berührstelle zwischen der Druckrolle (2) und der Wicklung ist.

11. Vorrichtung nach Anspruch 10, dadurch gekennzeichnet, daß die Druckrolle (2) einem Arm (2') zugeordnet ist, der mit einer Vorrichtung (16) zum Aufbringen der Andruckkraft der Druckrolle verbunden ist, welche mit der Ausgleichsvorrichtung (3) verbunden ist, daß der Sensor zum Messen der Winkelstellung des Arms (2') eingerichtet ist und daß die Nachsteuerung in der Lage ist, die Ausgleichsvorrichtung (3) derart zu verstellen, daß der Arm (2') eine vorgegebene Winkelstellung beibehält.

12. Vorrichtung nach Anspruch 11, dadurch gekennzeichnet, daß der Sensor durch zwei fotoelektrische Schranken gebildet ist, die beiderseits der vorgegebenen Winkelstellung des Arms (2') angeordnet sind, und daß die Nachsteuerung nach dem Ein-Aus-Prinzip arbeitet.

13. Vorrichtung nach Anspruch 11, dadurch gekennzeichnet, daß die Vorrichtung (16) zum Aufbringen der Andruckkraft ein Schrittmotor ist und daß der Sensor eine Decodierschaltung für die Winkelstellung des Schrittmotors ist.

14. Vorrichtung nach einem der Ansprüche 9 bis 13, dadurch gekennzeichnet, daß ihr Rahmen eine ortsfeste Zange (19) trägt.

15. Vorrichtung nach einem der Ansprüche 9 bis 14, dadurch gekennzeichnet, daß die Einfügevorrichtung (6, 7) eine erste Vorrichtung (6), die eine bewegliche Zange (8) zum Mitnehmen der Zwischenlage trägt, eine Abschneidevorrichtung (12) und eine Einfügevorrichtung für die Zwischenlage (10) umfaßt.

16. Vorrichtung nach einem der Ansprüche 9 bis 14, dadurch gekennzeichnet, daß die Einfügevorrichtung eine erste, zwischen einem vorderen Anschlag (21) und einem hinteren Anschlag (20) bewegliche und eine Abschneidevorrichtung (12) tragende Vorrichtung (6) und eine zweite, zwischen einem vorderen Anschlag (22) und einem hinteren Anschlag (23) bewegliche Vorrichtung (7) umfaßt und daß die zweite Vorrichtung (7) eine erste bewegliche Zange (8) zum Bewegen der Zwischenlage (1) sowie eine Einfügevorrichtung für die Zwischenlage (10) umfaßt.

17. Vorrichtung nach Anspruch 16, dadurch gekennzeichnet, daß der vordere Anschlag (22) der zweiten Vorrichtung (7) ein Nocken ist, dessen Kontur ($\alpha_2$) zum Einstellen der Vorderkanten der aufeinanderfolgenden Zwischenlagen (1) auf einen gleichen Radius der Trommel (9) gewählt ist.

18. Vorrichtung nach einem der Ansprüche 15 bis 17, dadurch gekennzeichnet, daß die Anschläge (20, 21) der ersten Vorrichtung (6) Nocken sind, deren Kontur ($\alpha_1$) zum Abschneiden der Zwischenlagen (1) durch die Abschneidevorrichtung (12) auf eine solche Länge gewählt ist, daß sich nach dem Wickeln die Hinterkanten der aufeinanderfolgenden Zwischenlagen (1) entlang einem gleichen Radius der Trommel (9) befinden.

19. Vorrichtung nach einem der Ansprüche 9 bis 18, dadurch gekennzeichnet, daß wenigstens eine der Vorrichtungen ein Schieber (6, 7) ist.

## Claims

1. Method of fabricating superimposed master capacitors employing a spiral winding on a drum of metallized films and a periodic insertion after a predetermined number of winding revolutions and with the aid of an insertion device of intermediate layers having a leading edge and a trailing edge, characterized in that the operation of inserting an intermediate layer (1) is automated and includes the following steps which are effected by a machine which is adapted to stop the drum (9): displacing the insertion means (6, 7) from a rear rest position as far as a front position for tangentially presenting an intermediate layer (1) so as to offer its leading edge while still in the same angular setting in relation to the axis of the drum, setting the drum (9) in rotation again for effecting the insertion of the intermediate layer (1), and displacing the insertion means from the front position to the rear position so that the winding of the metallized films (14, 15) is continued, in that the displacement of the insertion device in the direction of tangential insertion from the front position to the rear position is automatically caused to follow the diameter change of the winding to ensure the alignment of the intermediate layer leading edges with the extension of a first radius (CBo) of the drum, and that the intermediate layers are precut, their length increasing linearly with the radius of the outer layer of the winding in such a manner that the trailing edges of the successive intermediate layers are aligned in the extension of a second radius (CCo) of the drum, no portion of the intermediate layer being disposed in the angle of rotation (CBo, CCo) measured positively in the direction of rotation and less than $2\pi$ radians.

2. Method of fabricating superimposed master capacitors employing a spiral winding on a drum of metallized films and a periodic insertion after a predetermined number of winding revolutions and with the aid of an insertion device of intermediate layers having a leading edge and a trailing edge, characterized in that the intermediate layers are obtained by cutting a tape and the operation of inserting an intermediate layer (1) is automated and includes the following steps which are effected by a machine adapted to stop the drum (9): displacing the insertion device (6, 7) from a rear rest position as far as a front position for tangentially presenting an intermediate layer (1) so as to offer its leading edge while still in the same angular setting in relation to the axis of the drum, setting the drum (9) in rotation again for effecting insertion of an intermediate layer (1), stopping the drum (9) again after its rotation through a predetermined angle ($2\pi$-$\beta$) radians, employing a cutting device (12) integral with the insertion device (6, 7) for cutting the intermediate layer (1) from the remaining tape, displacing the insertion device from the front position to the rear position and setting the drum (9) in rotation again for continuing the winding of the metallized films (14, 15) and in that the displacement of the insertion device in the direction of tangential insertion is caused to automatically follow the diameter change of the winding to ensure the alignment of the intermediate layer leading edges with the extension of a first radius (CBo) of the drum and the alignment of the rear edges thereof with the extension of a second radius (CCo) of the drum, the angle ($\beta$) being such that no portion of the intermediate layer is disposed within the angle of rotation (CBo, CCo) measured positively in the direction of rotation and less than $2\pi$ radians.

3. Method according to claim 2, characterized in that the insertion device also carries movable tongs (8) for entraining the intermediate layer (1) which is closed during the displacement to the front position of the insertion device, and cams which form a front (21) and rear (20) stop, in that at the instant of the cutting off of the intermediate layer the insertion device is disposed at the front stop (21) and in that the contours of the cams are so chosen that the intermediate layer (1) is cut by the cutting device (12) in such a length that after the winding the trailing edges of the successive intermediate layers (1) are situated along a same radius of the drum (9).

4. Method according to any one of claims 1 to 3, characterized in that the operation of inserting an intermediate layer includes an operation of relifting a pressure roll (2) for the films (14, 15) in order to advance the intermediate layer (1) beneath said roller.

5. Method according to any one of claims 1 to 4, characterized in that the advance of the intermediate layer (1) is effected with an exceeding of the point where the latter is tangent to the outer layer of the winding in such a manner that a segment of the intermediate layer (1) is applied by the pressure roller (2) in order to start the winding.

6. Method according to claim 5, characterized in that said exceeding is proportional to the radius of the outer layer of the winding in such a manner that the leading edges of the successive intermediate layers (1) are in alignment along a radius of the drum (9).

7. Method according to claim 6, characterized in that the displacement of the insertion device (6, 7) between the rear position and the front position resides in displacing a first means (6) along a given path between a rear stop (20) and a front stop (21) and in continuing the displacement by a second means (7) carried by the first means (6) up to a stop (22) constituted by a profiled cam so as to implement the proportional displacement, the intermediate layer (1) being entrained by mobile tongs (8) carried by the second means (7), the mobile tongs (8) being closed for this purpose.

8. Method according to claim 7, characterized in that the displacement of the insertion device between the front position and the rear position resides in displacing the second (7) and the first (6) means towards the rear stop (20, 23), the moving tongs (8) being maintained open.

9. Apparatus for making superimposed master capacitors comprising a device for spiral winding onto a drum of metallized films and a device for periodic insertion of an intermediate layer after a given number of winding revolutions intended for the execution of the method according to one of claims 1 to 8, characterized in that the periodic insertion device is carried by a movable compensating device (3) and is adapted to be displaced between a rear position referred to as rest position and a front position where the intermediate layer is advanced to the point where the films (14, 15) rejoin the winding and that it comprises a position sensor for the outer layer of the winding on the drum and a position follow-up control for the position of the compensating device (3) at the position of said outer layer.

10. Apparatus according to claim 9, characterized in that it comprises a stacking compression roller (2) and that the point where the films (14, 15) rejoin the winding is the point of contact between the compression roller (2) and the winding.

11. Apparatus according to claim 10, characterized in that the compressing roller (2) is associated with an arm (2') connected to an application device (16) for the pressure force of the roller fixedly connected to the compensating device (3), that the sensor is adapted to measure the angular position of said arm (2') and that said follow-up control is adapted to displace the compensating device (3) in such a manner that said arm (2') retains a given angular position.

12. Apparatus according to claim 11, characterized in that the sensor is constituted by two photoelectric barriers disposed on either side of the given angular position of said arm (2') and that the follow-up control is of the on-off type.

13. Apparatus according to claim 11, characterized in that said application device (16) for the pressure force is a stepping motor and that said sensor is a decoding circuit for the angular position of said stepping motor.

14. Apparatus according to one of claims 9 to 13, characterized in that its frame carries fixed tongs (19) .

15. Apparatus according to one of claims 9 to 14, characterized in that the inserting device (6, 7) comprises a first means (6) carrying movable tongs (8) for entraining the intermediate layer, a cutting device (12) and an introduction device for an intermediate layer (10).

16. Apparatus according to one of claims 9 to 14, characterized in that the insertion device comprises a first means (6) movable between a front stop (21) and a rear stop (20) and carrying a cutting device (12) and a second means (7) movable between a front stop (22) and a rear stop (23), and that the second means (7) carries movable tongs (8) for entraining the intermediate layer (1) as well as an intermediate layer introduction device (10).

17. Apparatus according to claim 16, characterized in that the front stop (22) of the second means (7) is a cam whose profile ($\alpha_1$) is chosen for positioning the leading edges of the successive intermediate layer (1) on the same radius of the drum (9).

18. Apparatus according to any one of claims 15 to 17 characterized in that the stops (20, 21) of the first means (6) are cams whose profile ($\alpha_1$) is chosen in such a manner that the intermediate layer (1) is cut by the cutting device (12) to a length such that after winding the trailing edges of the successive intermediate layers (1) are situated along the same radius of the drum (9).

19. Apparatus according to any one of claims 9 to 18, characterized in that at least one of said means is a sliding block (6, 7).

Fig.1

Fig.2

Fig.3

EP 0 084 484 B2

Fig. 4

Fig.5

Fig.6

EP 0 084 484 B2

Fig.7

Fig. 8 a

Fig. 8 b

Fig. 9